# EUROPEAN PATENT APPLICATION

(11) **EP 1 292 086 A1**
(43) Date of publication of application: **12.03.2003**
(21) Application number: 01203360.1
(22) Date of filing: 06.09.2001
(51) Int. Cl.: H04M 1/02, G06F 1/16, G06F 3/033, H04M 1/247

(54) **Electronic device with touch screen**

(71) Applicant: TELEFONAKTIEBOLAGET LM ERICSSON, 126 25 Stockholm (SE)
(72) Inventor: Schön, Lennart, 172 72 Sundbyberg (SE)
(74) Representative: Stenborg, Anders Vilhelm

(57) **Abstract**

The present invention discloses an electronic device (1) comprising a touch sensitive screen (10), on which graphical information (60) is presented. Covering the screen (10), a cover member (4), either pivotal, sliding or fixed, with a number of keys (5) is provided. At least a portion of the cover member (4), including the keys (5) are made of transparent material, allowing the graphical information (60) on the screen (10) to be visible through the cover member (4). If the keys (5) are transparent, multi-functional programmable keys are obtained since the information (60) displayed therethrough may change as the operation of the device (1) changes. Consequently, a single key (5) may display all from figures and letters to symbols, e.g. arrows, depending on the actual operation. In addition, text-rich messages, images and films may be viewed through the cover member (4) and at the same time being modifiable, e.g. zoomed, simply by depressing a key (5). A method for operation control of such an electronic device (1) is also disclosed.

## Description

### TECHNICAL FIELD

The present invention generally relates to electronic devices and in particular to operation control of such devices equipped with a touch sensitive screen.

### BACKGROUND

Today, there is an increasing trend to integrate several different functions in portable electronic devices, such as mobile telephones, pagers, personal-digital-assistants (PDA) and pen-input notebooks. Traditionally, such electronic devices have been designed to operate a limited number of functions, e.g. mobile telephone services for a mobile station. By having only a rather small number of available functions electronic devices can easily be designed to be user-friendly and to have a small and comfortable size. New problems arise when one tries to integrate several functions into one electronic device. Cellular mobile stations of today are typically designed for operating not only as traditional mobile stations but also for providing portable or mobile facsimile, electronic email and short message services. Such a multi-functional electronic device must have a user interface that is designed to be able to display the necessary information. This most often requires relatively large display screens to cope with e.g. facsimile and electronic messages. However, large display screens are in conflict with the general request for small size portable electronic devices.

For mobile stations, one solution has been to use a relative large touch sensitive screen that is at least partially covered by a pivotal flip. Such a pivotal flip serves two objects: it protects the often very expensive and fragile touch sensitive screen, and it makes it possible to have a large screen at the same time as the overall size of the mobile station is relative small. Usually, a mobile station with a touch sensitive screen and a flip has two different operation modes: a "telephone mode", where the flip is closed, covering a major portion of the touch sensitive screen, and a "function mode", where the flip is open and the user has access to the entire screen. The telephone mode is used for traditional telephone services such as calling, whereas the function mode is used for e.g. Web services, electronic messaging and similar information rich functions that require larger display areas. By having a flip and a touch sensitive screen, the user may input data, e.g. make a call or send a message, either by pushing a key in the telephone mode or by touching the screen, by a finger or a pen, in the function mode.

A major disadvantage with such touch sensitive screens is the lack of positive tactile feedback to the user. It has often proven very difficult to sense by touch feedback, whether the screen was touched with enough force to generate the desired signal. Typically, the user needs a visual confirmation, being displayed on the screen, to indicate that the correct operation has been performed. Another solution could be to have an audible confirmation, but such a solution has its limitations, particularly in situations with high background noise.

In US 5,742,894 a radio communication device providing a plurality of radio communication services, e.g. radiotelephone, facsimile and electronic mail services, is disclosed. The communication device is equipped with a movable flip covering a portion of a touch sensitive screen. A keypad is integrated in the flip and is operable when the flip is in a closed position, covering the screen. When a user depresses a key of the keypad a portion of the key provides pressure against the touch sensitive screen, thereby activating a portion thereof.

In the document WO97/41677 a telecommunication instrument having a touch sensitive screen and a covering pivotal flip is disclosed. In the closed position a keypad mounted in the flip provides positive contact with the touch sensitive screen when a key is depressed by a user. The keys of the keypad may be made of a translucent or clear material enabling light provided by a backpanel to pass through and illuminate the keys. Numbers or other character symbols may either be molded in the top surface of each key or be provided by a cap, pressed over the top of each key.

Prior art solutions, such as the two documents mentioned above, make use of a pivotal flip or similar means, provided with keys for a more robust tactile feedback. However, a drawback of prior art solutions is that such a flip covers a large part of the touch sensitive screen in the telephone mode and the user therefore in this mode only has access to a small display area. Consequently, text-rich functions, e.g. Web and facsimile services, or display of images or films are reduced to be used only in the function mode, where the flip is open. But in this operation mode, the user does not have access to the keys and in consequence no access to the positive tactile feedback they provide. Therefore, a trade-off between size of the display area and a positive tactile feedback is present.

Additionally, the desire to reduce the overall size of telecommunication devices is directly contrary to the general request for more keys to cope with all functions associated with the new non-traditional telephone services, such as Web and facsimile services. Unless the keys are designed extremely small and thereby becoming non-user-friendly, more keys of course implies larger overall device size. Thus, the functions requiring larger display areas impose design problems to portable electronic devices, such as mobile telephones and personal-digital-assistants (PDA).

It would therefore be advantageous to use keys or similar means, giving a positive tactile feedback, at the same time as the user has access to the entire or a larger part of the display area, thereby being able to get both visual and tactile feedback when performing an operation. In addition, a way to integrate more functions into electronic devices, above all those of the portable type, without increasing the overall device size would be advantageous.

### SUMMARY

The present invention overcomes these and other drawbacks of the prior art arrangements.

An object of the present invention is to enable presentation of text-rich and graphically demanding information on electronic devices without changing operation modes and/or removing covering members or panels, such as flips.

It is a further object of the present invention to enable a user to perform all operation functions of the devices in a simple one-hand-operation.

Another object is to facilitate visual communication of information of electronic devices to a user and simplify the interpretation of graphical information representing performable functions.

Yet another object is to reduce the number of keys that are necessary to perform the operation functions of the device, thereby making it possible to reduce the overall size of the device without compromising with the number of operation functions.

It is yet another object of the present invention to provide programmable multi-functional keys that may change appearance and consequently be functional as the operation of the device changes.

The above objects are achieved by devices and methods according to the enclosed claims. In general words, an electronic device comprising a touch sensitive screen, on which graphical information may be presented, is provided with a cover member covering a first area of the touch sensitive screen. In the cover member a number of keys are arranged with a clearance from the touch sensitive screen. The clearance is such that the keys only come into touching contact with the touch sensitive screen when a user depresses a key. The cover member may either be fixed, or slidingly or pivotally movable between a closed position covering the first area of the touch sensitive screen and an open position spaced apart from the touch sensitive screen. In the open position the entire touch sensitive screen is accessible, but input signals have to be provided in form of a touching contact between the touch sensitive screen and a finger, pen or similar object. However, in the closed position, the input signal may be in form of a depressed key, giving positive tactile feedback.

In addition, at least a portion of the cover member, including the keys, is made of clear or transparent material allowing graphical information presented on the touch sensitive screen to be visible through the transparent portion of the cover member. The transparent material covers a second area of the touch sensitive screen, which second area may be identical to the first area or a portion thereof. If a large portion of the cover member is made of the transparent material text-rich messages and large images or films may be displayed through the cover member, and are therefore visible and readable without first opening the cover member. This means that a user may view large messages, images and films at the same time as he/she performs different operation functions, such as zooming or modifying the presented information, simply by depressing different keys.

Furthermore, if some or all of the keys are made of the transparent or clear material a more flexible use of the keys is obtained compared to prior art keys. In prior art, figures, letters, etc. are molded or printed directly or indirectly onto the keys. Since the prior art keys are provided with figures, letters etc., their appearance is fixed and cannot be changed. By having transparent keys and instead present figures, letters, etc. on the area of the touch sensitive screen covered by the keys, the appearance of the keys may change as the operation of the electronic device changes, e.g. the appearance of the keys in Web operation differs from the appearance in facsimile operation. Consequently, multi-functional programmable keys are obtained, which may fulfill many different functions depending on the actual operation of the electronic device. This multi-functional use of the keys reduces the need for more keys as the number of operation functions increase in electronic and above all telecommunication devices. In fact, the total number of keys may actually be lower compared to prior art telecommunication devices with only a small number of operation functions, since keys for special functions, e.g. volume and cursor keys may be removed.

The advantages with the present invention are that graphical information presented on a touch sensitive screen may be displayed through the cover member at the same time as input signals may be provided as a depression of a key. This preferred input form gives a user a better positive tactile feedback compared to if a finger or pen was used. In addition, since the keys lack molded and fixed symbols, the symbols displayed through them may change depending on the actual operation. This simplifies the interpretation of different selectable functions, displayed on the touch sensitive screen, and improves the visible communication between the device and a user.

### BRIEF DESCRIPTION OF THE DRAWINGS

The invention, together with further objects and advantages thereof, may best be understood by making reference to the following description taken together with the accompanying drawings, in which:
Fig. 1A is an illustration of a telecommunication device embodying the present invention, with a movable cover member in a closed position;
Fig. 1B is an illustration of the telecommunication device of Fig. 1A, with the movable cover member in an open position;
Fig. 2A is an illustration of a telecommunication device embodying the present invention, with a sliding cover member in a closed position;
Fig. 2B is an illustration of the telecommunication device of Fig. 2A, with the sliding cover member in an open position;
Fig. 3 is an illustration of a telecommunication device embodying the present invention, with a fixed cover member;
Fig. 4A and 4B schematically illustrate, in cross-sectional views, embodiments of a portion of the cover member and the touch sensitive screen of the present invention;
Fig. 5A and 5B illustrate areas of the touch sensitive screen covered by different embodiments of the cover member and areas being displayable through the cover member;
Fig. 6A-6D illustrate different embodiments of information being graphically presentable according to the present invention; and
Fig. 7 is a flow chart of the operation control method according to the present invention.

### DETAILED DESCRIPTION

The present invention is applicable to electronic devices having a touch sensitive screen covered, at least partly, by a cover member. The touch sensitive screen is used for displaying graphical information and also for receiving input signals in form of touching contacts between the screen and a key, finger, pen, or similar objects. Such electronic devices comprise portable radio communication and data presenting devices, including mobile telephones, pagers, personal-digital-assistants (PDA) and pen-input notebooks, but are not limited thereto. The present invention may also constitute a part of stationary electronic equipment, which use touch sensitive screens to display graphical information and receive input signals in form of a touching contact. Such stationary devices may include non-portable data presenting devices and apparatuses, including computers with touch sensitive screens.

The present invention will now be described in an embodiment of a telecommunication device. However, this embodiment is merely given as an illustrative example of the invention, which is not limited thereby.

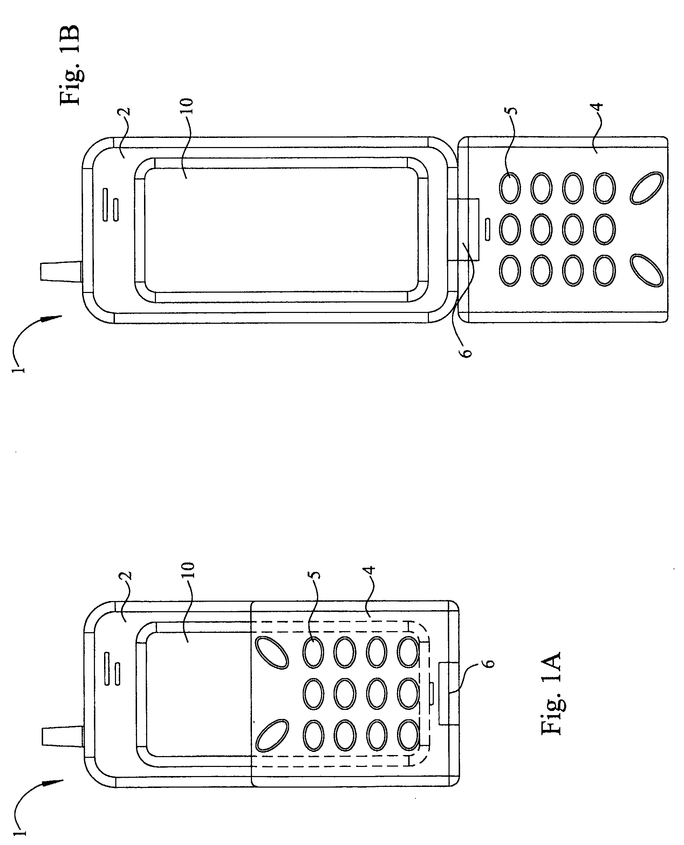

The telecommunication device embodiment of the present invention is illustrated in Figs. 1A, 1B, 2A, 2B and 3. Referring to Fig. 1A, a telecommunication device 1 having a touch sensitive screen 10 mounted in a housing 2 is illustrated. The telecommunication device 1 is further equipped with a pivotal cover member 4 that is in a closed position in Fig. 1A, covering a portion of the touch sensitive screen 10. The cover member 4 is pivotally mounted on the housing 2 preferably by conventional hinges 6. Other means that provides a pivotal mounting of the cover member 4 to the housing 2 may also be used, such as pivots and trunnions.

In the closed position, the cover member 4 covers and thereby protects a major portion of the touch sensitive screen 10 from external factors that may damage or scratch the very often easily damaged touch sensitive screen 10. The cover member 4 may be formed in such a way that its total length is shorter than the length of the touch sensitive screen 10. A portion of the touch sensitive screen 10 is thereby not covered by the cover member 4, but is freely accessible even when the cover member 4 is closed. However, the length of the cover member 4 may also be equal to the length of the touch sensitive screen 10. In such a case, the cover member 4 may be provided with a clear opening or window (not illustrated) covering preferably the upper area of the touch sensitive screen 10.

In Fig. 1B the telecommunication device 1 is illustrated with the cover member 4 in an open position, spaced apart from the housing 2 and the touch sensitive screen 10. The entire touch sensitive screen 10 is now accessible for a user. The user may in this case perform the desired operation functions by touching the touch sensitive screen 10 with a finger, a pen or similar objects.

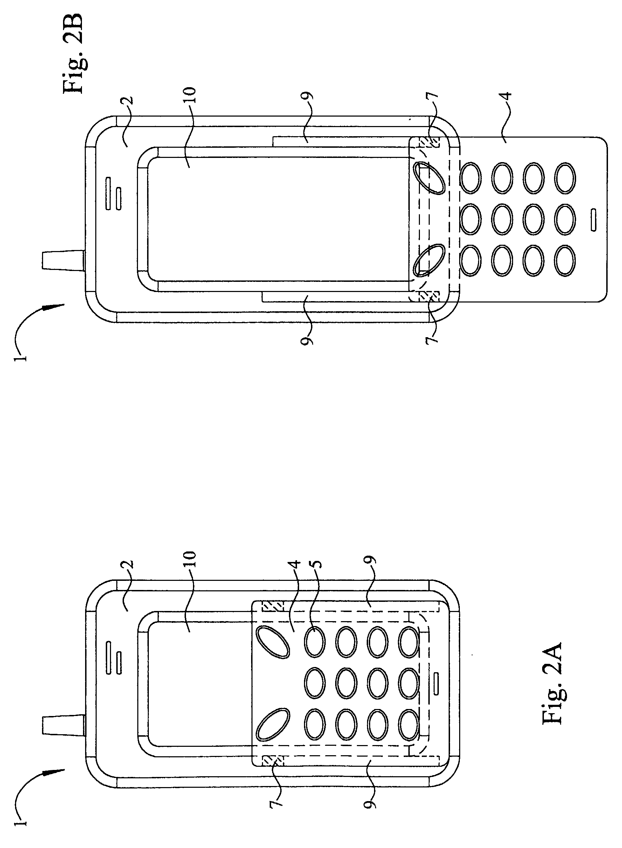

As illustrated in Figs. 2A and 2B, instead of using a pivotal cover member and hinges, the telecommunication device 1 may be provided with a sliding cover member 4. In such a case, runners or sliding channels 9 are preferably arranged in the housing 2 of the telecommunication device 1, in which the cover member 4 may slide between a closed position as in Fig. 2A, covering a major portion of the touch sensitive screen 10, and an open position as in Fig. 2B. The sliding cover member 4 may then be provided with protruding elements 7 along its longitudinal sides, protruding into the runners or sliding channels 9, thereby allowing the sliding opening/closing of the cover member 4. However, it may instead be possible to provide the cover member 4 with runners or sliding channels along its longitudinal sides. Onto the housing 2 of the telecommunication device 1, protruding elements are then arranged, making the sliding motion of the cover member possible. In fact, any solution that allows the cover member 4 to be moved between a closed and an open position may be used by the telecommunication device 1 embodying the present invention.

As described before, the length of the cover member 4 may be smaller or equal to the length of the touch sensitive screen 10. In latter case, the cover member 4 may be provided with a clear opening or window (not illustrated) covering preferably the upper area of the touch sensitive screen 10.

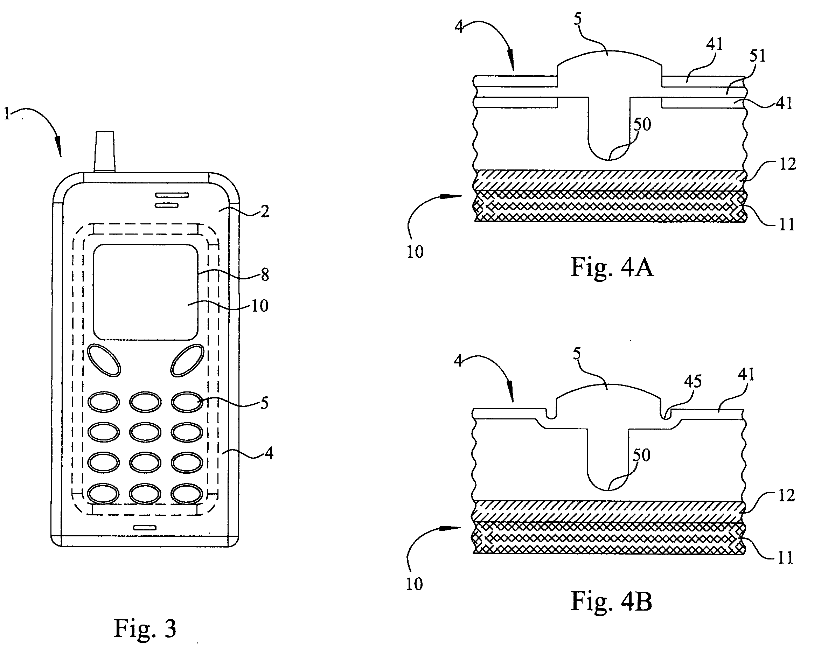

Another embodiment of a telecommunication device 1 according to the present invention is illustrated in Fig. 3. This embodiment lacks the movable cover member as compared to the device in Figs. 1A, 1B and 2A, 2B, respectively. Instead, this embodiment is equipped with a fixed cover member 4 that covers the touch sensitive screen 10. Just as for the embodiments of Figs. 1A, 1B and 2A, 2B, respectively, the cover member 4 may be formed in such a way that its total length is shorter than the length of the touch sensitive screen 10. A portion of the touch sensitive screen 10 is thereby not covered by the cover member 4. However, the length of the cover member 4 may also be equal to the length of the touch sensitive screen 10. In such a case, the cover member 4 may be provided with a clear opening or window 8 covering preferably the upper area of the touch sensitive screen 10.

The cover member 4, whether pivotal, sliding or fixed, is provided with a number of keys 5 mounted therein. In the illustrated embodiments of Figs. 1A, 1B, 2A, 2B and 3, the keys 5 are arranged in a conventional twelve-key telephone configuration plus two additional keys. However, it should be recognized that the number and configuration of keys 5 of the embodiments are merely given as an illustrative example of a possible key arrangement. In fact, any key arrangement where at least one key 5 is mounted in the cover member 4 may be used according to the present invention.

Fig. 4A is a cross-sectional view of the cover member 4 and the touch sensitive screen 10, illustrating the position of a key 5 within the cover member 4. The keys 5 may either, as in Fig. 4A, be arranged individually within the cover member 4, as a unit or keypad or as a combination of individual keys and one or several keypads. The key 5 in Fig. 4A is controllably positioned in a cavity formed by the actual shape of the cover member 4. The cover member 4 forms a frame 41 into which vertically protruding portions 51 of the key 5 fit. The frame 41 is so constructed that the key 5 is arranged with a clearance between the touch sensitive screen 10 and a lower portion 50 of the key 5. The keys/keypads are preferably made of an elastomeric material having sufficient elasticity so that when the top of a key 5 is depressed, the bottom surface 50 of the key 5 will move downwards into touching contact with the surface of the touch sensitive screen 10. Suitable materials include elastomeric plastics and rubber materials, which preferably is sufficiently clear or transparent for graphical information presented on the touch sensitive screen 10 to be displayed through the keys 5. The material of the frame 41 of the cover member 4 is preferably more rigid than the material of the keys 5, allowing a rigid support. This prohibits that the keys 5 do not come into contact with the touch sensitive screen 10 by mistake. Transparent or clear polycarbonate (PC), acrylonitrile butadiene styrene (ABS), polyoxymethylene (POM) and polybutadiene terephtalate (PBT) are examples of suitable materials for the frame portion 41 of the cover member 4.

A most important property of the materials of the keys 5 or the frame 41 is that at least a portion thereof must be sufficiently clear or transparent to enable display of graphical information presented on the touch sensitive screen 10 below. This means that figures, letters, images etc. presented on the screen 10 should be visible through the transparent portion of the cover member 4, including the keys 5 and the frame 41. The material preferably has such optical properties that the presented graphical information is as clear and non-distorted as possible when displayed through the material. Furthermore, the actual design of the cover member 4 with its frame 41 and the keys 5 should preferably be such that the graphical information presented on the screen 10 still is possible to identify and read when viewed through the transparent material. This means that unfavorable refraction and similar optical distortion generally should be minimized to get such a clear and real representation of the touch sensitive screen 10 and the presented graphical information as possible. However, in some cases, optical modifications may be of use. For instance, a key 5 can be shaped to provide a magnifying action, thereby enlarging a certain portion of the touch sensitve screen 10.

Another design of the cover member 4, where the keys 5 constitute integral parts of the cover member 4 and consequently are made of the same material, is illustrated in Fig. 4B. In this figure, the key 5 is defined from the frame portion 41 of the cover member 4 by a recess 45. As for the design in Fig. 4A, the frame 41 is so constructed that the key 5 is arranged with a clearance between the touch sensitive screen 10 and the lower surface 50 of the key 5. The recess 45 allows the bottom surface 50 of the key 5 to be moved downwards into touching contact with the surface of the touch sensitive screen 10 when the top of the key 5 is depressed. In this design, the material of the cover member 4 should have such properties that it is rigid enough to prevent unintended touch of the bottom 50 of the key 5 with the screen 10. In addition, the material should be such that the recess 45 allows the key 5 to be moved when depressed, and of course the material should be transparent. This particular design of the cover member 4 removes any optical distortion caused by refraction in the contact between the keys 5 and the frame 41 in Fig. 4A. Therefore, any graphical information presented on those areas of the touch sensitive screen 10 covered by the edges of the keys 5 are likely to be displayed more clear and non-distorted in the embodiment of Fig. 4B compared to that of Fig. 4A.

The touch sensitive screen 10 arranged in an electronic device according to the present invention is also schematically illustrated in Figs. 4A and 4B. The touch sensitive screen 10 basically comprises two distinct screens or panels: a display screen 11 and a touch sensitive panel 12 mounted thereon.

The display screen 11 is arranged for displaying graphical information. In addition, the display screen 11 must be able to change the displayed information not only when input signals (indirectly in form of a touching contact between the touch sensitive panel 12 and an object) are received but also when the operation mode of the device changes, such as from Web to facsimile operation.

A suitable display screen 11 is a liquid crystal display (LCD) panel. In order to improve readability of displayed graphical information, especially in cold environments, the LCD panel may optionally be provided with an electric panel (not illustrated) heating the LCD panel. Likewise, a light guide with light source (not illustrated) may be mounted on top of the LCD panel to provide light for the LCD panel, increasing the readability in dark environments.

Another suitable display screen 11 is a TFT/TFP panel onto which a light guide is mounted. A light source is then arranged in connection with the light guide for providing light to the TFT/TFP panel. In fact, as a person skilled in the art understands, any suitable display screen may be used, fulfilling requirements on sufficient readability and being able to change displayed graphical information in response to input signals.

The touch sensitive panel 12 of the touch sensitive screen 10 is provided for receiving input signals in form of a touching contact with an object, and then transforming this touch signal into an electric signal. The input signal may be a touching contact between the panel 12 and a key, finger, pen or another object. If the electronic device is provided with a pivotal or sliding cover member, the input signal is preferably a depressed key, when the cover member is closed, whereas a finger or pen is used when the cover member is open. Examples of touch sensitive panels 12 include analog resistive touch screen and other electrostatic and electromagnetic screens, which support touch input.

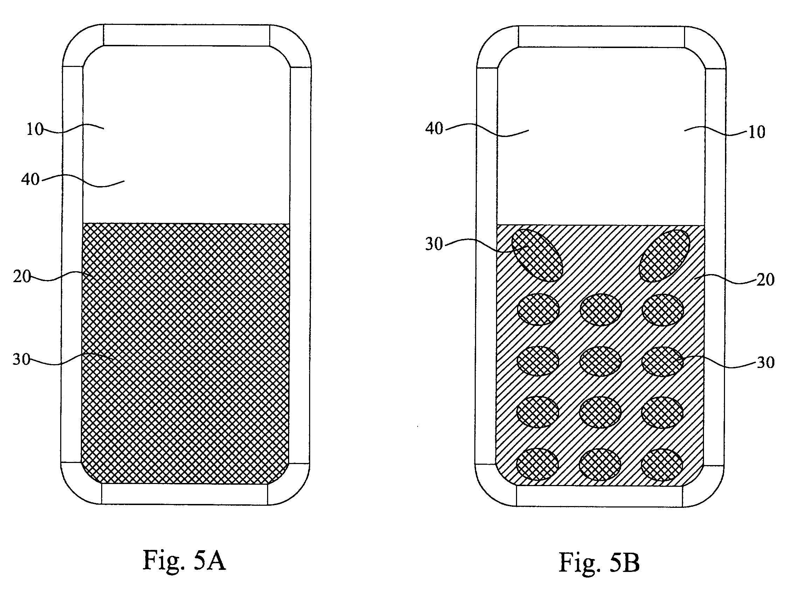

Figs. 5A and 5B schematically illustrate the touch sensitive screen 10 when covered by the cover member. The surface of the touch sensitive screen 10 can basically be divided into a number (depending on the actual design of the cover member) of areas 20, 30 and 40, as shown in Figs. 5A and 5B. The first area 20 is the portion of the touch sensitive screen 10 that is covered by the cover member. This area 20 may in turn be divided into two distinct areas depending on the material of the cover member. A portion of the cover member that is made of clear or transparent material covers a second area 30, which thus is visible through the transparent cover member. The rest of the first area 20, i.e. any area of the screen 10 that is covered with portions of the cover member that are not made of transparent material, are not viewable through the cover member and are therefore not visible when the cover member is closed. A possible third area 40 of the screen 10 is present when the length of the cover member is smaller than that of the touch sensitive screen 10 and/or when the cover member is provided with a clear opening or window therein. This possible third area 40 is therefore always visible, independent on the actual material of the cover member. Consequently, the areas that are visible to a user when the cover member is closed are those areas 30, 40 that are covered by transparent material, not covered at all or by an opening or window, respectively. Therefore, it is preferably at first hand on these areas 30, 40 that graphical information is presented when the cover member covers the touch sensitive screen 10. However, the entire touch sensitive screen 10 may be visibly accessible simply by opening a pivotal or sliding cover member.

In Fig. 5A the entire cover member covering the touch sensitive screen 10 is made of transparent material. Consequently, the entire touch sensitive screen 10 is visible regardless of whether the cover member is closed or open. This embodiment makes it possible to view text-rich messages and/or large images and films without opening the cover member, and is therefore advantageous for such electronic devices where the cover member is fixed. The embodiment is also useful when the electronic device, in this case a telecommunication device, operates in text-rich, or image- or film-presenting modes, such as for Web or facsimile services. A user may in such an operation mode take full advantage of the invention by being able to view e.g. large images or text messages at the same time as he/she has access to the keys. Consequently, the user may input necessary operation control signals, i.e. push the keys, to manipulate the image or message accordingly. This obviously simplifies the operation of the electronic devices compared to prior art devices in several different ways. Firstly, the cover member does not need to be opened to input the signals or view the message, image or film. Secondly, the input signal is in the form of a much more preferred key depression instead of a touch with a finger or a pen. Consequently, a user is most likely able to perform the necessary control actions, in this case push a key, with one hand, whereas with prior art solutions the cover member must be opened, a pen must be brought out and so on, procedures that requires two hands and more operations.

Fig. 5B illustrates the extent of visible accessibility with another embodiment of the cover member. In this cover member, only the keys of the cover member are made of clear or transparent material. Though this embodiment requires opening of the cover member to have visible access to the entire touch sensitive screen 10, it still has several advantages compared to prior art techniques. Since no figures, letters, etc. are molded or printed directly or indirectly on the keys, they are very flexible and may be used for multi-functional purposes. Through a single key, a letter, figure, pattern, color, etc. may be displayed depending on the actual operation of the telecommunication device. For instance, during traditional telephone or dial operation, the portion 30 of the touch sensitive screen 10 covered by the transparent keys may display figures, ranging from 0 to 9, whereas during messaging or facsimile operations letters may preferably be displayed through the keys. This multi-functional use of the keys reduces the need for more keys as the number of operation functions increase in electronic and above all telecommunication devices. In fact, the total number of keys may actually be lower compared to prior art telecommunication devices with only a small number of functions, since e.g. volume and cursor keys may be removed.

However, not all of the keys need to be made of the transparent material. It may be possible to have some transparent keys, being able to perform multi-functional operations, and conventional keys of non-transparent material. These conventional non-transparent keys may then be provided with figures, letters and other symbols, molded or printed directly or indirectly onto the keys. Such keys are preferably arranged in those portions of the cover member that either do not cover the touch sensitive screen or are above areas of the screen that are not likely to present information, such as the sides and edges.

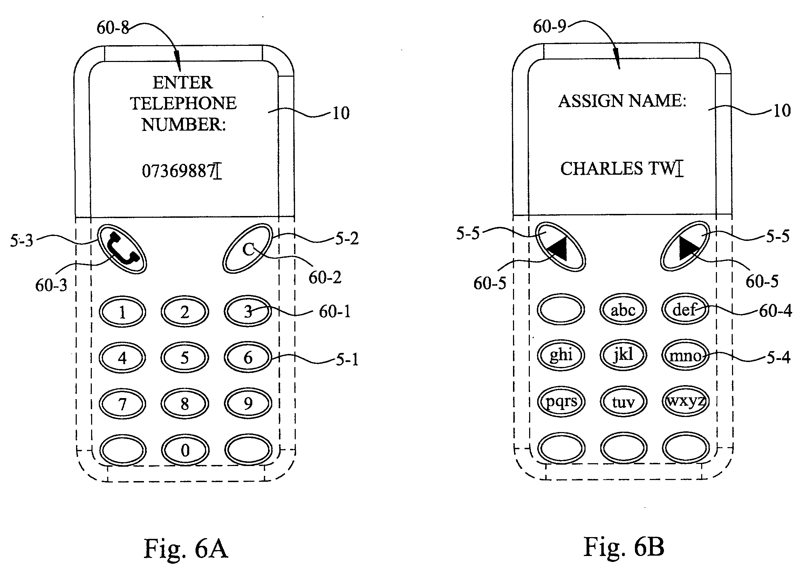

Fig. 6A to 6D are illustrative examples of graphical information 60 that may be presented on the touch sensitive screen 10. In Fig. 6A, the touch sensitive screen is illustrated in a typical telephone or dial operation mode. In this embodiment ten keys 5-1 (of which only one is provided with a reference number to simplify the interpretation of the figure) of the conventional twelve-key telephone configuration display figures 60-1, ranging from 0 to 9. "Display" in this context actually means that the area of the touch sensitive screen 10 covered by a key presents the graphical information 60. Apart from figure displaying keys 5-1, a key 5-2 preferably has a delete function for removing incorrect already inputted figures, schematically illustrated with the letter C 60-2. A key 5-3 for actually performing the call is also preferably provided, here shown with a telephone icon 60-3. The inputted telephone number 60-8, i.e. the figures associated with the figure displaying keys 5-1 being pushed, is preferably presented on the portion of the touch sensitive screen 10 that is not covered by the cover member, or covered by an opening or window. This portion of the screen 10 may also contain other graphical information 60-8 for the user.

Fig. 6B illustrates a typical configuration, were graphical information 60 is displayed according to a text operation, such as for short message services (SMS) or chat operation functions. In this embodiment, some of the keys 5-4 display letters 60-4, used for writing a message. Besides the letter displaying keys 5-4, e.g. cursor keys 5-5 may be provided, illustrated with a left and right handed arrow 60-5, respectively. These keys 5-5 may be used for moving a cursor backwards or forwards in the message to correct misspellings or insert letters afterwards. The written text 60-9 is, in analogy with Fig. 6A, preferably presented on the portion of the touch sensitive screen 10 that is not covered by the cover member, or covered by an opening or window. For large messages, it may advantageous to display the message 60-9 even in the area of the touch sensitive screen 10 covered by the cover member.

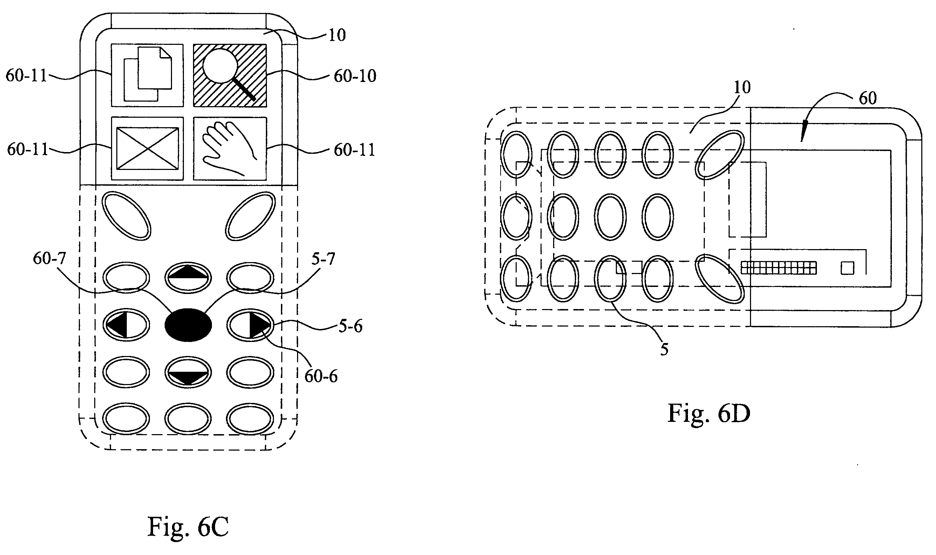

Fig. 6C illustrates an embodiment where a user may select between a number of different functions 60-10, 60-11, such as send message, open message, copy message, etc. The different selectable functions 60-10, 60-11 are preferably presented as patterns, symbols or images on the portion of the touch sensitive screen 10 that is not covered by the cover member, or covered by an opening or window. However, if many functions are present some may be presented on areas of the screen 10 covered by the cover member. In addition to the presented functions 60-10, 60-11, four of the keys 5-6 display cursors in form of arrows 60-6. These cursors may be used for moving, upwards, downwards, left or right, between the functions 60-10, 60-11 until the desired function is reached 60-10, here illustrated hatched. This function 60-10 may be selected preferably by pushing yet another key 5-7, here totally colored 60-7. The exact number of cursors and the actual area where they are displayed may of course differ from the embodiment of Fig. 6C.

Fig. 6D is an embodiment illustrating presentation of graphical information 60 on a major portion of the touch sensitive screen 10, including the area covered by the cover member. This embodiment schematically represents those instances when large images or messages need to be displayed, showing the advantage of the present invention. As can be seen in Fig. 6D, it is possible to view graphical information 60 through the cover member, i.e. there is no need to first open the cover member to view such information 60. It may even be possible to view films and moving images without opening the cover member. Therefore, the present invention may be used in electronic devices that support real-time video conferences and similar operations. Since the cover member is closed, a user may, at the same time as viewing the film, image, etc., perform different operation functions, such as zooming, simply by pushing different keys. Of course, if the user does not want to view the graphical information 60 through the cover member, he/she may simply open the cover member (if not fixed) to have access to the entire touch sensitive screen.

The graphical information presented on the touch sensitive screen in Figs. 6A to 6D are merely examples, given to illustrate the diverse and flexible use of the present invention. In fact, any form of graphically displayable information may be presented on the screen, including letters, figures, colors, patterns, moving patterns, twinkling patterns, images, films and videos, etc. By having such diversity in displayable information, the interpretation by a user of different operation functions may be easier since clear and illustrative symbols may be used for presenting functions. Therefore, the visible communication between the electronic device and the user is simplified, e.g. a twinkling pattern displayed through a key may encourage the user to press that particular key. A consequence with the present invention is, as mentioned earlier, that a key may display different graphical information depending on the actual operation of the electronic device. In addition, not all areas covered by the keys need to contain graphical information. The keys covering such non-presenting areas are not used (inactive) in that particular operation and should therefore not be pushed. The keys covering areas that present graphical information are active keys, which may be pushed by a user. As a person skilled in the art understands the exact number of active and inactive keys, respectively, may vary between different functions and operations. In addition, a single key may be inactive in one particular operation, but active in another operation, displaying graphical information.

Addionally, the graphical information presented on the touch sensitive screen when the pivotal or sliding cover member is closed may differ from the graphical information presented when the cover member is open, although the actual operation mode of the electric device has not changed. In operation with a closed cover member, information, e.g. selectable functions, may with advantage be presented on those areas of the touch sensitive screen that are covered by transparent keys. However, if the pivotal or sliding cover member is open and thus the keys are not available, such information may be displayed in other areas of the touch sensitive, e.g. at one of its sides, forming a menu row. The actual shape of the graphical information may also be changed depening on the position of the cover member. Such a change in shape may facilitate interpretation and visible communication between the device and a user, e.g. by enlarging the presented graphical information when the pivotal cover member is opened.

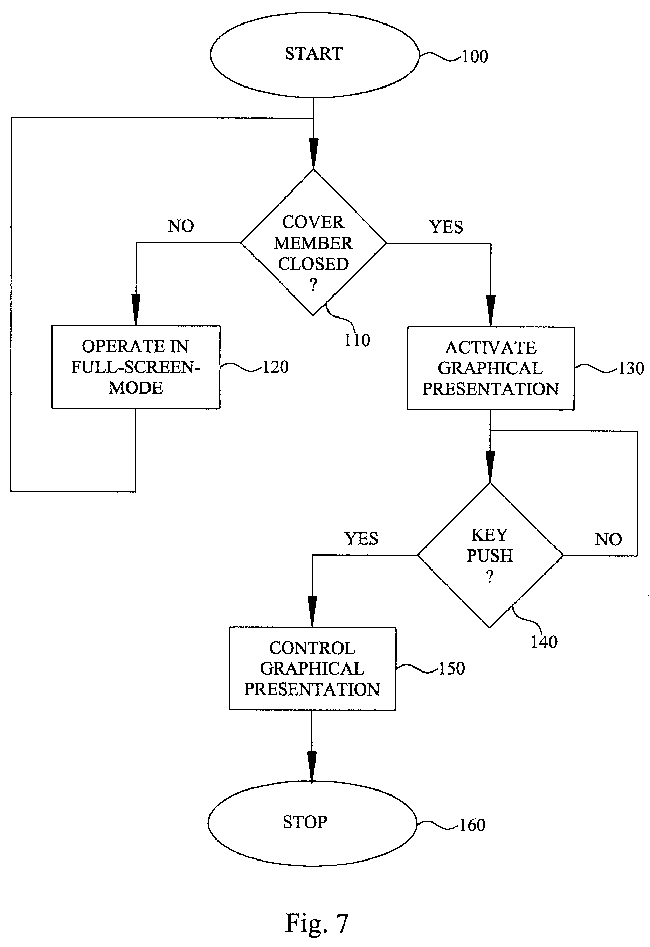

Fig. 7 illustrates the operation control procedure of an electronic device according to the present invention. The operation control starts in step 100. In step 110, an investigation whether the cover member is closed is performed. If the electronic device has a fixed cover member this step is unnecessary since the cover member is always closed, and consequently the step 110 may be excluded. If it is concluded that the cover member is not closed but open, the procedure continues to step 120. In this step 120, the electronic device operates in full-screen mode. Therefore, a user has full access to the entire touch sensitive screen, leading to that any input signals to the device must be in the form of a touch between the touch sensitive screen and a finger, pen or similar object. The advantages with the present invention are not present in this mode and consequently the method continues by returning to the investigation of step 110. However, if it is concluded that the cover member is closed, graphical presentation is activated 130. This activation may e.g. be in the form of displaying different selectable functions, opening a Web-window or simply activation of the touch sensitive screen without displaying any graphical information. To perform an operation, such as dialing a number or activating a function, an input signal is required in form of a key push. Step 140 investigates whether a key is pushed or not. In the last case, i.e. no keys are being pushed, the method simply returns to the investigation of step 140. However, if it is concluded that a key is pushed and an input signal is received by the electronic device, the method proceeds to step 150. In this step 150, the control operations associated with the depressed key are performed, such as dialing a number or activating a function. Performance of the control operation is most often, but not necessarily, visible by a change of the graphical information presented on the touch sensitive screen. Such a change may include a twinkle or change of color of a pattern or symbol, display of a message, change in selectable functions, and so on. The operation control methods then ends in step 160.

The embodiments described above are merely given as examples, and it should be understood that the present invention is not limited thereto. Further modifications, changes and improvements that retain the basic underlying principles disclosed and claimed herein are comprised in the invention.

## Claims

1. A portable electronic device (1) comprising:
a touch sensitive screen (10);
a cover member (4) being arrangable for covering a first area (20) of said touch sensitive screen (10), said cover member (4) in turn comprising a number of keys (5) mounted therein, said number of keys (5) being movable into a touching contact with said touch sensitive screen (10) when said cover member (4) covers said first area (20), at least a portion of said cover member (4) being made of a transparent material,
**characterized by**
means for presenting graphical information (60) at a second area (30) of said touch sensitive screen (10), said second area (30) being covered by said transparent portion, said means for presenting graphical information (60) being operable when said cover member (4) covers said first area (20), and being responsive to said touching contact between said number of keys (5) and said touch sensitive screen (10).

2. The device according to claim 1, **characterized in that** said touch sensitive screen (10) comprises a touch sensitive panel (12) and a display screen (11).

3. The device according to claim 2, **characterized in that** said display screen (11) is a liquid crystal display panel.

4. The device according to claim 2, **characterized in that** said display screen (11) is a light guide being arranged on a TFT/TFP panel.

5. The device according to any of the claims 1 to 4, **characterized in that** at least one of said number of keys (5) is made of said transparent material.

6. The device according to any of the claims 1 to 5, **characterized in that** portions of said cover member (4) between said number of keys (5) are made of said transparent material.

7. The device according to any of the claims 1 to 6, **characterized in that** said transparent material consists of one clear or transparent material of the list:
polycarbonate;
acrylonitrile butadiene styrene;
polyoxymethylene;
polybutadiene terephtalate; or
a combination of at least two of the other alternatives in this list.

8. The device according to any of the claims 1 to 7, **characterized in that** said cover member (4) is pivotally mounted to a body (2) of said electronic device (1) and is movable between a closed position, covering said first area (20) of said touch sensitive screen (10), and an open position, at which said cover member (4) is spaced apart from said touch sensitive screen (10).

9. The device according to any of the claims 1 to 7, **characterized by** a first sliding element (9) arranged in a body (2) of said electronic device (1) and a second sliding element (7) arranged in said cover member (4), said first (9) and second (7) sliding elements are in sliding conntact with each other to make a sliding motion of said second sliding element (7) in relation to said first sliding element (9) possible, thereby allowing a sliding movement of said cover member (4) between a closed position, covering said first area (20) of said touch sensitive screen (10), and an open position, allowing access to at least a major portion of said touch sensitive screen (10).

10. The device according to any of the claims 1 to 9, **characterized in that** said presented graphical information (60) is displayed as at least one item of the list:
a color;
a figure;
a letter;
a pattern;
a moving pattern;
a twinkling pattern;
an image;
a film; or
a combination of at least two of the other alternatives in this list.

11. The device according to any of the claims 1 to 10, **characterized in that** said portable electronic device (1) is a radio communication and/or data presenting device.

12. The device according to claim 11, **characterized in that** said portable electronic device (1) is a mobile telephone.

13. A graphic presenting and interaction unit comprising:
a touch sensitive screen (10);
a cover member (4) being arrangable for covering a first area (20) of said touch sensitive screen (10), said cover member (4) in turn comprising a number of keys (5) mounted therein, said number of keys (5) being movable into a touching contact with said touch sensitive screen (10) when said cover member (4) covers said first area (20), at least a portion of said cover member (4) being made of a transparent material,
**characterized by**
means for presenting graphical information (60) at a second area (30) of said touch sensitive screen (10), said second area (30) being covered by said transparent portion, said means for presenting graphical information (60) being operable when said cover member (4) covers said first area (20), and being responsive to said touching contact between said number of keys (5) and said touch sensitive screen (10).

14. The unit according to claim 13, **characterized in that** said touch sensitive screen (10) comprises a touch sensitive panel (12) and a display screen (11).

15. The unit according to claim 14, **characterized in that** said display screen (11) is a liquid crystal display panel.

16. The unit according to claim 14, **characterized in that** said display screen (11) is a light guide being arranged on a TFT/TFP panel.

17. The unit according to any of the claims 13 to 16, **characterized in that** at least one of said number of keys (5) is made of said transparent material.

18. The unit according to any of the claims 13 to 17, **characterized in that** portions of said cover member (4) between said number of keys (5) are made of said transparent material.

19. The unit according to any of the claims 13 to 18, **characterized in that** said transparent material consists of one clear or transparent material of the list:
polycarbonate;
acrylonitrile butadiene styrene;
polyoxymethylene;
polybutadiene terephtalate; or
a combination of at least two of the other alternatives in this list.

20. The unit according to any of the claims 13 to 19, **characterized in that** said presented graphical information (60) is displayed as at least one item of the list:
a color;
a figure;
a letter;
a pattern;
a moving pattern;
a twinkling pattern;
an image;
a film; or
a combination of at least two of the other alternatives in this list.

21. A method for operation control of a portable electronic device (1) comprising the step of:
covering a first area (20) of a touch sensitive screen (10) by a cover member (4), in turn comprising a number of keys (5), said number of keys (5) being movable into a touching contact with said touch sensitive screen (10) when said cover member (4) covers said first area (20), at least a portion of said cover member (4) is made of a transparent material,
**characterized by** the further steps of:
presenting graphical information (60) at a second area (30) of said touch sensitive screen (10) covered by said transparent portion; and
receiving an input control signal in the form of said touching contact between said number of keys (5) and said touch sensitive screen (10).

22. A method for operation control of a portable electronic device (1), having a touch sensitive screen (10) and a cover member (4) being arrangable for covering a first area (20) of said touch sensitive screen (10), said cover member (4) in turn comprising a number of keys (5) mounted therein, said number of keys (5) being movable into a touching contact with said touch sensitive screen (10) when said cover member (4) covers said first area (20), at least a portion of said cover member (4) being made of a transparent material,
**characterized by** the steps of:
presenting graphical information (60) at a second area (30) of said touch sensitive screen (10) covered by said transparent portion; and
receiving an input control signal in the form of said touching contact between said number of keys (5) and said touch sensitive screen (10).

23. The method according to claims 21 or 22, **characterized in that** said step of presenting graphical information (60) in turn comprises the step of:
presenting said information (60) as at least one item of the list:
a color;
a figure;
a letter;
a pattern;
a moving pattern;
a twinkling pattern;
an image;
a film; or
a combination of at least two of the other alternatives in this list.

24. The method according to any of claims 21 to 23, **characterized in that** said touching contact is provided by the step of:
pushing a key (5) by a user.

25. The method according to any of the claims 21 to 24, **characterized in that** the step of presenting graphical information (60) in turn comprises:
presenting graphical information (60) in the areas (30) of said touch sensitive screen (10) being covered by active keys (5-1, 5-2, 5-3).
